# EUROPÄISCHE PATENTSCHRIFT

(11) **EP 3 625 075 B1**
(45) Veröffentlichungstag und Bekanntmachung des Hinweises auf die Patenterteilung: **23.12.2020**
(21) Anmeldenummer: 18712819.4
(22) Anmeldetag: 12.03.2018
(51) Int. Cl.: B60K 23/04, B60W 30/045, B60W 30/186, B60W 10/08, B60W 10/16

(54) **VERFAHREN ZUR STEUERUNG EINES ANTRIEBSMOMENTS UND ANTRIEBSSTRANGANORDNUNG ZUR DURCHFÜHRUNG DES VERFAHRENS**
METHOD FOR CONTROLLING A DRIVE TORQUE AND DRIVE TRAIN ASSEMBLY FOR CARRYING OUT THE METHOD
PROCÉDÉ DE COMMANDE D'UN COUPLE D'ENTRAÎNEMENT ET DISPOSITIF DE TRANSMISSION POUR LA MISE EN OEUVRE DU PROCÉDÉ

(43) Veröffentlichungstag der Anmeldung: 25.03.2020
(73) Patentinhaber: GKN Automotive Limited, Birmingham, West Midlands B37 7YE (GB)
(72) Erfinder: OBERGÜNNER, Peter, 50939 Köln (DE); NIESSEN, Harwin, 50345 Hürth (DE); HÖCK, Michael, 53819 Neunkirchen-Seelscheid (DE); GASSMANN, Theodor, 53721 Siegburg (DE)
(74) Vertreter: Neumann Müller Oberwalleney & Partner Patentanwälte
(86) Internationale Anmeldenummer: PCT/EP2018/056128
(87) Internationale Veröffentlichungsnummer: WO 2019/174716

(56) Entgegenhaltungen:
- EP-A1- 2 353 916
- WO-A1-2017/157479
- DE-A1-102015 118 759
- JP-A- H06 320 971
- US-A- 5 788 005
- US-A1- 2004 147 366
- US-A1- 2013 304 341

## Beschreibung

Die Erfindung betrifft ein Verfahren zur Steuerung des Antriebsmoments eines Elektromotors im Antriebsstrang eines Kraftfahrzeugs. Die Erfindung betrifft ferner eine Antriebsanordnung zur Durchführung eines solchen Verfahrens.

Es sind Kraftfahrzeuge bekannt, die einen ersten Antriebsstrang mit einer ersten Antriebsquelle zum Antreiben einer ersten Antriebsachse sowie einen zweiten Antriebsstrang mit einer zweiten Antriebsquelle zum Antreiben einer zweiten Antriebsachse aufweisen. Die Antriebsquellen können sich voneinander unterscheiden, beispielsweise kann eine der beiden Antriebsquellen als Verbrennungsmotor und die andere als elektrische Maschine gestaltet sein. Derartige Antriebskonzepte werden auch als "Hybridantrieb" bezeichnet. Die elektrische Maschine und der Verbrennungsmotor können jeweils für sich oder gemeinsam überlagert das Kraftfahrzeug antreiben.

Der elektrischen Maschine kann ein Getriebe im Leistungspfad nachgelagert sein, eine die von der elektrischen Maschine erzeugte Drehbewegung vom Schnellen ins Langsame übersetzt, sowie eine Leistungsverzweigungseinheit, welche die eingeleitete Drehbewegung auf zwei Seitenwellen aufteilt.

Aus der EP 2 353 916 B1 ist ein Verfahren zum Ansteuern einer Kupplungsanordnung eines Kraftfahrzeugantriebsstranges bekannt, die zwei Reibkupplungen mit einem gemeinsamen Eingangsglied aufweist, das mit einer Antriebseinheit verbunden ist. Die erste Reibkupplung weist ein erstes Ausgangsglied auf, das mit einer ersten Antriebswelle verbunden ist, und die zweite Reibkupplung weist ein zweites Ausgangsglied auf, das mit einer zweiten Antriebswelle verbunden ist. Die Abtriebswellen sind jeweils mit einem zugehörigen Fahrzeugrad antriebsmäßig verbunden. Bei Erfassung von unterschiedlichen Reibwerten der Fahrbahnoberflächen des ersten bzw. des zweiten Fahrzeugrads werden die beiden Reibkupplungen derart angesteuert, dass das Antriebsmoment beider Fahrzeugräder auf das auf die Fahrbahn übertragbare Antriebsmoment des Antriebsrades mit dem niedrigeren Reibwert beschränkt wird.

Aus der DE 10 2015 118 759 A1 ist ein Verfahren zur Steuerung des Antriebsmoments und der Antriebsdrehzahl in einer Antriebsstranganordnung eines Kraftfahrzeugs bekannt, die zwei voneinander getrennte Antriebsstränge aufweist. Der erste Antriebsstrang wird von einem Verbrennungsmotor angetrieben. Der zweite Antriebsstrang wird von einer elektrischen Maschine angetrieben. Bei dem Verfahren ist vorgesehen, dass die Drehzahlen der ersten und zweiten Antriebsachse überwacht werden, eine Solldrehzahl für die elektrische Maschine zum Antreiben der zweiten Antriebsachse ermittelt wird, die elektrische Maschine in einem Solldrehzahl-Modus in Abhängigkeit von den Drehzahlen der Antriebsachsen gesteuert wird, ein Solldrehmoment zum Antreiben der zweiten Antriebsachse auf Basis der Drehzahlen der beiden Antriebsachsen ermittelt wird, und die Kupplung im zweiten Antriebsstrang in einem Solldrehmoment-Modus in Abhängigkeit von der Drehzahl der ersten und zweiten Antriebsachse gesteuert wird.

Aus der DE 10 2014 221 055 A1 ist ein Kraftfahrzeug mit einer ersten Antriebsmaschine in Form eines Verbrennungsmotors zum Antreiben einer ersten Antriebsachse und einer zweiten Antriebsmaschine in Form eines Elektromotors zum Antreiben einer zweiten Antriebsachse bekannt. Es ist eine Antriebssteuereinrichtung vorgesehen, die eingerichtet ist, die erste und die zweite Antriebsmaschine in Abhängigkeit eines Solldrehmoments als Steuergröße zu steuern. Dabei werden die Antriebsmomentvorgaben in passende Steuersignale zum Betrieb der ersten und zweiten Antriebsmaschine umgesetzt.

Aus der US 2016/0356370 A1 ist eine Steuerung für den Antriebsstrang eines Kraftfahrzeugs bekannt. Die Steuerung ist konfiguriert, um das Antriebsdrehmoment zu reduzieren, wenn der Schlupf eines Antriebsrads der ersten Achse einen vorbestimmten Schwellenwert überschreitet. Die Steuerung steuert das auf die Räder einer zweiten Achse ausgeübte Drehmoment und erkennt, wenn unterschiedlicher Schlupf an den Rädern anliegt, an welchem der Räder der Schlupf einen vorbestimmten Schwellenwert überschreitet. Mittels der Steuerung erfolgt dann eine Drehmomentangleichung.

Aus der WO 2017 157479 A1 ist ein Elektroantrieb zum Antreiben einer Antriebsachse eines Kraftfahrzeugs bekannt. Der Elektroantrieb umfasst eine elektrische Maschine mit einer Motorwelle, eine Getriebeeinheit mit einer Getriebewelle, die von der Motorwelle drehend antreibbar, und eine Doppelkupplungseinheit. Die Doppelkupplungseinheit umfasst einen von der Getriebewelle drehend antreibbaren Kupplungskorb sowie zwei Lamellenpakete, die mittels jeweiliger Aktuatoren separat betätigbar sind, um Drehmoment auf eine jeweilige Seitenwelle zu übertragen. Eine solche Doppelkupplungsanordnung, die von der Anmelderin auch unter der Bezeichnung "Twinster"-Kupplung vermarktet wird, ermöglicht eine variable Drehmomentverteilung auf die beiden Ausgangswellen. Je nach Fahrzustand kann das Drehmoment am kurveninneren beziehungsweise kurvenäußeren Rad individuell eingestellt werden, was insgesamt zu einer verbesserten Fahrdynamik, respektive Fahrstabilität führt. Dieses Steuerungsprinzip wird auch als aktive oder variable Momentenverteilung oder "Torque Vectoring" bezeichnet.

Eine variable Momentenverteilung kann jedoch bei Fahrsituationen mit deutlich unterschiedlicher Traktion am linken und rechten Fahrzeugrad, die auch als "µ-Split-Situation" bezeichnet werden, zu einem ungewünschten Giermoment um die Fahrzeughochachse führen. Heutige Allrad-Antriebsanordnungen mit Doppelkupplungseinheit in einer Antriebsachse verwenden eine aufwendige Regelstrategie, um besonders bei höheren Geschwindigkeiten solche kritischen Giermomente zu vermeiden. Grundlegender Ansatz ist es dabei, eine erste Regelstrategie ("Select-High-Strategie") bei niedrigerer Geschwindigkeit für maximale Traktion und eine zweite Regelstrategie ("Select-Low-Strategie") bei höherer Geschwindigkeit für eine optimale Fahrstabilität zu verwenden.

In Allrad-Antriebssystemen mit Elektroantrieb und Doppelkupplungen zur variablen Momentenverteilung kann die Steuerung der Drehmomentverteilung zwischen den beiden Fahrzeugrädern mittels der Doppelkupplungen erfolgen.

Der vorliegenden Erfindung liegt die Aufgabe zugrunde, ein Verfahren zur Steuerung des Antriebsmoments eines Elektromotors für einen Antriebsstrang eines Kraftfahrzeugs vorzuschlagen, mit dem eine hohe Fahrstabilität sowohl bei hohen als auch bei niedrigen Geschwindigkeiten gewährleistet ist. Der Erfindung liegt ferner die Aufgabe zugrunde, eine entsprechende Antriebsstranganordnung vorzuschlagen, mit der ein solches Steuerungsverfahren durchgeführt werden kann.

Die Lösung besteht in einem Verfahren zur Steuerung des Antriebsmoments eines Elektromotors im Antriebsstrang eines Kraftfahrzeuges, wobei der Antriebsstrang eine erste Seitenwelle zum Antreiben eines ersten Fahrzeugrads, eine zweite Seitenwelle zum Antreiben eines zweiten Fahrzeugrads, eine steuerbare erste Reibungskupplung, die der ersten Seitenwelle zugeordnet ist, eine steuerbare zweite Reibungskupplung, die der zweiten Seitenwelle zugeordnet ist, sowie ein im Leistungspfad zwischen dem Elektromotor und zumindest einer der beiden Reibungskupplungen angeordnetes Antriebsteil; mit folgenden Verfahrensschritten: Überwachen eines die Drehzahl des Antriebsteils repräsentierenden Antriebsdrehzahlwerts; Überwachen eines die Drehzahl des ersten Fahrzeugrads repräsentierenden ersten Drehzahlwerts; Überwachen eines die Drehzahl des zweiten Fahrzeugrads repräsentierenden zweiten Drehzahlwerts; Ermitteln eines übertragbaren ersten Kupplungsmoments für die erste Reibungskupplung in Abhängigkeit von dem Antriebsdrehzahlwert und dem ersten Drehzahlwert; Ermitteln eines übertragbaren zweiten Kupplungsmoments für die zweite Reibungskupplung in Abhängigkeit von dem Antriebsdrehzahlwert und dem zweiten Drehzahlwert; Überwachen eines die Fahrzeuggeschwindigkeit repräsentierenden Fahrzeug-Geschwindigkeitswerts und Vergleichen des Fahrzeug-Geschwindigkeitswerts mit einem vorgegebenen Geschwindigkeitsschwellenwert; und wenn der Fahrzeug-Geschwindigkeitswert unterhalb des vorgegebenen Geschwindigkeitsschwellenwert liegt: Steuern des Elektromotors in einem hohen Drehmoment-Modus derart, dass ein vom Elektromotor erzeugtes Motormoment nach Bedarf zur Verfügung gestellt wird; und wenn der Fahrzeug-Geschwindigkeitswert oberhalb des vorgegebenen Geschwindigkeitsschwellenwert liegt: Steuern des Elektromotors in einem niedrigen Drehmoment-Modus derart, dass das vom Elektromotor erzeugte Motormoment kleiner ist als das Doppelte des kleineren von dem ersten und zweiten übertragbaren Kupplungsmoment plus einem Zusatzmoment, das 50 % oder weniger als 50 % des maximal erzeugbaren Moments des Elektromotors beträgt.

Ein Vorteil des Verfahrens ist, dass eine hohe Fahrstabilität insbesondere auch bei hohen Geschwindigkeiten des Fahrzeugs gewährleistet ist, wobei Reibungsverluste im Antriebsstrang durch die Steuerung des Motormoments des Elektromotors im niedrigen Drehmoment-Modus minimiert werden. Dies wird durch die beschriebene Begrenzung des vom Elektromotor bereitgestellten Motormoments erreicht, wenn bei oberhalb des Geschwindigkeitsschwellenwerts eine Fahrsituation mit unterschiedlichen Reibwerten zwischen den beiden Fahrzeugrädern ("µ-split") erkannt wird. Der Leistungseintrag in die Reibungskupplung, die dem Fahrzeugrad mit größerem Schlupf beziehungsweise geringerem Reibwert zur Fahrbahn zugeordnet ist, ist entsprechend auf das auf die Fahrbahn übertragbare Antriebsmoment reduziert. Folglich ist auch der Energieeintrag in die jeweilige Reibungskupplung gering, so dass das Verfahren zu einer erhöhten Energieeffizienz bei Betreiben des Antriebsstranges beiträgt. Ein weiterer Vorteil besteht darin, dass das Verfahren bei auftretender Fahrsituation mit unterschiedlichen Reibwerten zwischen den beiden Fahrzeugrädern ("µ-split") beliebig lange durchgeführt werden kann, da der Wärmeeintrag in die Reibungskupplung mit geringerem übertragbaren Antriebsmoment gering ist und entsprechend keine Thermoabschaltung erfolgt.

Durch das beschriebene Verfahren verhält sich der Antriebsstrang bei Steuerung des Elektromotors im niedrigen Drehmoment-Modus wie ein offenes Differentialgetriebe, das hinsichtlich der übertragbaren Drehbewegung eine ausgleichende Wirkung zwischen den beiden Seitenwellen hat.

Das Antriebsteil, dessen Drehzahl sensiert wird, kann prinzipiell jedes beliebige Bauteil im Leistungspfad im Leistungspfad zwischen Elektromotor und Reibungskupplung sein. Entscheidend ist, dass der ermittelte Antriebsdrehzahlwert als Vergleichswert zur Ermittlung der Drehzahldifferenz zwischen dem Eingang und dem Ausgang der Kupplung herangezogen werden kann. Beispielsweise kann das Antriebsteil die Motorwelle des Elektromotors, eine hiermit verbundene Antriebswelle, ein Zahnrad, ein Kupplungseingangsteil oder ein hiermit drehfest verbundenes Antriebsteil sein. Nach einer beispielhaften Ausführungsform kann zum Ermitteln des übertragbaren ersten Kupplungsmoments die Drehzahl des Kupplungseingangsteils mit der Drehzahl des ersten Kupplungsausgangsteils, und zum Ermitteln des übertragbaren zweiten Kupplungsmoments die Drehzahl des Kupplungseingangsteils mit der Drehzahl des zweiten Kupplungsausgangsteils verglichen werden. Die beiden Kupplungseingangsteile haben dieselbe Drehzahl und können nach einer möglichen Ausführungsform auch einteilig gestaltet sein.

Das Zusatzmoment kann vorgesehen werden, um eine gewisse Traktion an dem Rad mit größerem Schlupf bereitzustellen, allerdings in einer Größenordnung, bei der ein gegebenenfalls auftretendes Giermoment unkritisch und im Hinblick auf die Fahrstabilität gut handhabbar ist. Insbesondere ist vorgesehen, dass dieses Zusatzmoment kleiner ist als 50 % des vom Elektromotor maximal erzeugbaren Motormoments, insbesondere kleiner als 30 %, gegebenenfalls auch kleiner als 10 % des vom Elektromotor maximal erzeugbaren Motormoments. Für die Ausgestaltung des Zusatzmoments sind mehrere Möglichkeiten denkbar, die einzeln oder in Ergänzung zur Anwendung kommen können. In einer einfachen Ausführung kann das Zusatzmoment auf einen konstanten Wert (k) festgelegt sein, der beispielsweise zwischen 5 Nm und 150 Nm betragen kann, wobei die obere Grenze auch niedriger sein kann, beispielsweise 100 Nm oder 50 Nm. Folglich wäre das bereitgestellte Motormoment (Tm) des Elektromotors im Falle des Regeleingriffs auf das Zweifache des übertragbaren Antriebsmoments (T20low) des Fahrzeugrads mit dem niedrigen Reibwert zur Fahrbahn zuzüglich diesem konstanten Wert (k) limitiert (Tm < 2 * T20low + k). Nach einer weiteren Möglichkeit kann das Zusatzmoment (Tx) variabel eingestellt werden, vorzugsweise in Abhängigkeit von der Fahrzeuggeschwindigkeit. Dabei wäre insbesondere vorgesehen, dass das Zusatzmoment bei höheren Fahrzeuggeschwindigkeiten auf einen kleineren Wert eingestellt wird als bei niedrigeren Fahrzeuggeschwindigkeiten. Es ist auch möglich, dass das Zusatzmoment in Abhängigkeit von den ermittelten übertragbaren Kupplungsmomenten eingestellt wird. Insbesondere kann das Zusatzmoments auf einen Bruchteil der Differenz zwischen dem ersten und zweiten übertragbaren Kupplungsmoment eingestellt werden, beispielsweise auf einen Wert kleiner als ein Viertel des Differenzmoments.

Mit Steuerung des Motormoments in einem niedrigen oder hohen Drehmoment-Modus ist regelungstechnisch gemeint, dass das Drehmoment die einzustellende Führungsgröße (Sollwert) zur Steuerung des Elektromotors ist. Je nach Fahrzustand des Kraftfahrzeugs wird das für die gewünschte Fahrdynamik nötige Drehmoment des Elektromotors ermittelt und der Elektromotor stellt entsprechend dieses Motormoment bereit, das in den Antriebsstrang eingeleitet wird. Dabei wir im hohen Drehmoment-Modus ein maximales Motormoment nach Bedarf, das heißt ohne momentenmäßige Begrenzung, zur Verfügung gestellt und in den Antriebsstrang eingeleitet. Der Traktionsbedarf richtet sich nach der jeweiligen Fahrsituation beispielsweise in Abhängigkeit von der anliegenden Steigung und/oder gewünschten Beschleunigung des Fahrzeugs. Im niedrigen Drehmoment-Modus wird das Motormoment des Elektromotors auf einen Grenzwert limitiert, der sich am Doppelten des kleinsten übertragbaren Kupplungsmoments der beiden Fahrzeugräder orientiert, wie oben beschrieben. Das Ermitteln des Motormoments im Select-Low-Modus erfolgt zumindest auf Basis der Drehzahlen der beiden Räder der elektromotorisch angetriebenen Achse und der Drehzahl des Elektromotors oder eines hiermit antriebsverbundenen Bauteils. Bei dem Bauteil kann es sich beispielsweise um ein Kupplungseingangsteil handeln, insbesondere einen Außenlamellenträger, der mit dem Elektromotor antriebsverbunden ist. Das Motormoment kann beispielsweise mittels einer elektronischen Regeleinheit (ECU) berechnet werden. Die Steuerung der beiden Reibungskupplungen kann mit derselben oder einer weiteren elektronischen Regeleinheiten erfolgen.

Der Elektromotor wandelt Energie um und kann im Motor- oder Generatorbetrieb arbeiten, wobei das Motormoment entsprechend positiv oder negativ sein kann, je nachdem, ob sich das Fahrzeug im Schub- oder Zugbetrieb befindet. Die Steuerung des Motormoments des Elektromotors kann sich entsprechend auf beide Betriebsmodi beziehen. Im Motor- beziehungsweise Zugbetrieb wandelt der Elektromotor elektrische Energie in mechanische Energie um, so dass die Antriebsachse beziehungsweise die beiden Seitenwellen des Kraftfahrzeugs angetrieben werden können. Das Motormoment ist positiv, so dass das Verfahren im niedrigen Drehmoment-Modus auf das vom Elektromotor auf die Räder maximal übertragbares Antriebsmoment bezogen ist, wie oben beschrieben. Im Generator- beziehungsweise Schubbetrieb wandelt der Elektromotor mechanische Energie in elektrische Energie um, welche dann in einer Batterie gespeichert werden kann. Das Motormoment ist negativ, so dass das Verfahren im niedrigen Drehmoment-Modus auf das von den Rädern auf den Elektromotor maximal übertragbares Bremsmoment bezogen ist, wie oben beschrieben. Es ist möglich, die Bremsenergie des Kraftfahrzeugs zurückzugewinnen, was auch als Rekuperation bezeichnet wird.

Als weiterer Verfahrensschritt kann vorgesehen sein, dass eine für die Querbeschleunigung des Kraftfahrzeugs repräsentative Querbeschleunigungsgröße überwacht und ein Querbeschleunigungssignal erzeugt wird, das als weitere Eingangsgröße für die Steuerung des Elektromotors verwendet werden kann. Insbesondere kann das Querbeschleunigungssignal zur Bestimmung des Motormoments und/oder der Drehzahl des Elektromotors verwendet werden. Ferner kann das Querbeschleunigungssignal auch zur Steuerung des von den beiden Reibungskupplungen zu übertragenden Sollmoments herangezogen werden. Nach einer möglichen Ausführung kann der Elektromotor in dem hohen Drehmoment-Modus gesteuert werden, wenn das Querbeschleunigungssignal oberhalb eines definierten Querbeschleunigungsschwellwertes liegt, und/oder der Elektromotor kann in dem niedrigen Drehmoment-Modus gesteuert werden, wenn das Querbeschleunigungssignal unterhalb des definierten Querbeschleunigungsschwellwertes liegt. Die Berücksichtigung des Querbeschleunigungssignals kann optional erfolgen. Das heißt, das Motormoment kann im niedrigen Drehmoment-Modus gesteuert werden, wenn nur die Bedingung erfüllt ist, dass der Fahrzeug-Geschwindigkeitswert oberhalb des vorgegebenen Geschwindigkeitsschwellenwert liegt, oder zusätzlich die Bedingung erfüllt ist, dass das Querbeschleunigungssignal oberhalb des definierten Querbeschleunigungsschwellwertes liegt. Der Querbeschleunigungsschwellwert kann insbesondere zwischen 2m/s² und 4m/s² liegen und beispielsweise 3m/s² betragen.

Das genannte Verfahren eignet sich für Kraftfahrzeuge mit nur einem angetriebenen Antriebsstrang oder für Kraftfahrzeuge mit zwei angetriebenen Antriebssträngen, die voneinander mechanisch getrennt sind. Mit mechanisch getrennt ist gemeint, dass der erste und der zweite Antriebsstrang separat ausgeführt sind und kein kraftübertragendes Glied zwischen den beiden Antriebssträngen vorgesehen ist. Der Elektromotor dient allein zum Antrieb des einen Antriebsstranges beziehungsweise der einen Antriebsachse, während die andere Antriebsquelle allein zum Antrieb des anderen Antriebsstranges beziehungsweise der anderen Antriebsachse dient.

Bei einem Kraftfahrzeug mit zwei Antriebssträngen, bei dem die Vorderachse von einer vorderen Antriebsquelle antreibbar ist und die Hinterachse von dem Elektromotor, kann vorgesehen sein, dass eine Differenzdrehzahl zwischen den beiden Fahrzeugrädern der Vorderachse ermittelt wird und der Elektromotor in Abhängigkeit von der Differenzdrehzahl der Vorderachsräder gesteuert wird, derart, dass der Elektromotor in dem hohen Drehmoment-Modus gesteuert wird, wenn die Differenzdrehzahl unterhalb eines definierten Differenzdrehzahlschwellwertes liegt, und, dass der Elektromotor in dem niedrigen Drehmoment-Modus gesteuert wird, wenn die Differenzdrehzahl oberhalb des definierten Differenzdrehzahlschwellwertes liegt. Die Berücksichtigung der Differenzdrehzahl für die Wahl zwischen niedrigen Drehmoment-Modus und hohem Drehmoment-Modus kann optional erfolgen, das heißt zusätzlich zur Berücksichtigung der Fahrzeug-Geschwindigkeitswert und gegebenenfalls zur Berücksichtigung des Querbeschleunigungssignals. Der Differenzdrehzahlschwellwert kann insbesondere zwischen 20 U/min und 40 U/min liegen und beispielsweise 30 U/min betragen. Allgemein kann vorgesehen sein, dass der Elektromotor zum Antreiben der Hinterachse betrieben wird, wenn die Achsdrehzahl der Vorderachse größer ist als die Achsdrehzahl der Hinterachse.

Zur Ermittlung der Achsdrehzahlen kann zumindest ein die Drehzahl der jeweiligen Fahrzeugachse repräsentierendes Signal erfasst werden. Zur Berechnung der Achsdrehzahl kann beispielsweise die gemittelte Raddrehzahl des rechten und linken Rads der jeweiligen Achse oder, bei Verwendung eines Differentials in der Vorderachse, auch die Drehzahl des Differentialkorbs verwendet werden. Der Elektromotor kann im aktivierten Zustand optional auf eine Solldrehzahl so eingestellt werden, dass die vom Elektromotor angetriebene Fahrzeugachse mit einer höheren Drehzahl antreibbar ist als die vom Verbrennungsmotor angetriebene Fahrzeugachse. Ferner kann vorgesehen sein, dass der Elektromotor bei Kurvenfahrt des Kraftfahrzeugs zum Antreiben der Hinterachse zugeschaltet wird, wobei die Solldrehzahl des Elektromotors dann vorzugsweise so eingestellt wird, dass die Hinterachse mit einer größeren Drehzahl antreibbar ist als die Vorderachse.

Nach einer Verfahrensführung können für die Räderdrehzahlen des Kraftfahrzeugs repräsentative Raddrehzahlgrößen überwacht und hieraus entsprechende Raddrehzahlsignale erzeugt werden. Die Raddrehzahlsignale können zur Ermittlung des Motormoments des Elektromotors, der Solldrehzahl des Elektromotors, dem Sollmoment der ersten Reibungskupplung und/oder dem Sollmoment der zweiten Reibungskupplung verwendet werden.

Die Regelung der Fahrdynamik des Kraftfahrzeugs ist insbesondere bei Kurvenfahrt von Wichtigkeit, wobei auch die Fahrzeuggeschwindigkeit eine entscheidende Rolle spielt. Insofern kann als weiterer Verfahrensschritt vorgesehen sein, dass eine für den Lenkungswinkel der Räder des Kraftfahrzeugs repräsentative Lenkungsgröße überwacht und ein entsprechendes Lenkungssignal erzeugt wird. Das Lenkungssignal kann dann zur Einstellung des Motormoments und/oder der Motordrehzahl des Elektromotors und/oder des jeweiligen Sollmoments der beiden Reibungskupplungen benutzt werden, um die Fahrdynamik des Kraftfahrzeugs zu beeinflussen.

Als weiterer Verfahrensschritt kann vorgesehen sein, dass eine für die Stellung des Gaspedals des Kraftfahrzeugs repräsentative Gaspedalgröße überwacht und ein Gaspedalsignal erzeugt wird, wobei das Gaspedalsignal zur Einstellung des Motormoments und/oder der Motordrehzahl des Elektromotors und/oder des jeweiligen Sollmoments der beiden Reibungskupplungen benutzt werden kann.

Es versteht sich, dass einzelne, mehrere oder alle der genannten Verfahrensschritte durchgeführt werden können. Das heißt es können das Lenkungssignal, Querbeschleunigungssignal, Gaspedalsignal und/oder die Raddrehzahlsignale für die Steuerung des Motormoments beziehungsweise der Drehzahl des Elektromotors einzeln oder in Kombination verwendet werden. Dasselbe gilt entsprechend auch für die Steuerung des von den beiden Reibungskupplungen übertragbaren Drehmoments. Ebenso ist es denkbar, dass weitere Größen erfasst und für die Ermittlung der Regelgrößen herangezogen werden, wie beispielsweise die Längsbeschleunigung, die Gierrate des Kraftfahrzeugs und/oder weitere in Frage kommende Signale.

Nach einer Verfahrensführung, die auch als Rekuperiermodus bezeichnet werden kann, können die beiden Reibungskupplungen geschlossen werden, wenn das Kraftfahrzeug im Schubbetrieb ist. Als Schubbetrieb wird in diesem Zusammenhang ein Fahrzustand verstanden, in dem der Elektromotor durch das Fahrzeug geschleppt (geschoben) wird. Auf diese Weise wird der Elektromotor von den Rädern der zweiten Antriebsachse angetrieben und arbeitet im Generatorbetrieb. Dabei wandelt der Elektromotor die von der Antriebsachse eingeleitete mechanische Energie in elektrische Energie um, welche in einer mit dem Elektromotor verbundenen Batterie gespeichert werden kann.

Nach einer weiteren Verfahrensführung, die auch als Segelmodus bezeichnet werden kann, können die beiden Reibungskupplungen geöffnet werden, wenn das Kraftfahrzeug im Segelbetrieb betrieben wird, so dass der Elektromotor von den Rädern des Antriebsstrangs abgekoppelt ist. Der Begriff Segeln soll vorliegend die Funktion umfassen, wenn während der Fahrt die primäre Antriebsquelle (Verbrennungsmotor) vom zugehörigen Antriebsstrang abgekoppelt wird, ohne zu bremsen. Im Segelbetrieb kann entsprechend auch der Elektromotor von den Seitenwellen abgekoppelt werden, was durch Öffnen der Kupplungen geschieht, und gegebenenfalls abgeschaltet werden.

Die Lösung der oben genannten Aufgabe besteht weiter in einer Antriebsstranganordnung für ein Kraftfahrzeug, umfassend: einen Antriebsstrang mit einem Elektromotor, einer ersten Seitenwelle zum Antreiben eines ersten Fahrzeugrads, einer zweiten Seitenwelle zum Antreiben eines zweiten Fahrzeugrads, einer steuerbaren ersten Reibungskupplung, die der ersten Seitenwelle zugeordnet ist, einer steuerbaren zweiten Reibungskupplung, die der zweiten Seitenwelle zugeordnet ist; sowie einem im Leistungspfad zwischen dem Elektromotor und zumindest einer der beiden Reibungskupplungen angeordneten Antriebsteil; erste Sensormittel zur Ermittlung eines die Drehzahl der ersten Seitenwelle repräsentierenden ersten Drehzahlwerts; zweite Sensormittel zur Ermittlung eines die Drehzahl der zweiten Seitenwelle repräsentierenden zweiten Drehzahlwerts; einen Antriebsdrehzahlsensor zur Ermittlung eines die Drehzahl des Antriebsteils repräsentierenden Antriebsdrehzahlwerts; sowie zumindest eine Steuereinheit zum Steuern der elektrischen Maschine; wobei die Steuereinheit dazu eingerichtet ist, das Verfahren nach einer oder mehreren der oben genannten Ausführungsformen durchzuführen.

Mit der Antriebsstranganordnung ergeben sich dieselben Vorteile wie mit dem erfindungsgemäßen Verfahren, so dass diesbezüglich auf die oben genannte Beschreibung Bezug genommen wird. Es versteht sich, dass alle verfahrensbezogenen Merkmale auf das Erzeugnis übertragbar sind, und umgekehrt, alle das Erzeugnis betreffenden Merkmale auf das Verfahren. Dadurch, dass der Elektromotor bei hohen Geschwindigkeiten im niedrigen Drehmoment-Modus betrieben wird, ist eine hohe Fahrstabilität gewährleistet, wobei zugleich Reibungsverluste reduziert sind. Jeder der beiden Seitenwellen ist eine Reibungskupplung zugeordnet, die das jeweils von der zugehörigen Seitenwelle übertragbare Drehmoment regelt. Die Reibungskupplungen können im Leistungspfad zwischen dem Elektromotor und der ersten beziehungsweise zweiten Seitenwelle, oder auch innerhalb der jeweiligen Seitenwelle angeordnet sein.

Der elektromotorisch angetriebene Antriebsstrang kann eine Getriebeeinheit aufweisen, die ein vom Elektromotor eingeleitetes Drehmoment auf zwei Ausgangsteile aufteilt. Beispielsweise kann die Getriebeeinheit eine Winkeltrieb oder Stirnradgetriebe umfassen. Die Getriebeeinheit kann als Einganggetriebe, das heißt mit festem Übersetzungsverhältnis zwischen Getriebeeingang und Getriebeausgang gestaltet sein. Alternativ kann die Getriebeeinheit auch eine steuerbare Schaltstufe aufweisen, mit der eine vom Elektromotor eingeleitete Drehbewegung auf verschiedene Ausgangsdrehzahlen übersetzt werden kann.

Nach einer Ausführungsform umfasst die erste Reibungskupplung einen ersten Außenlamellenträger, der mit dem Elektromotor antriebsverbunden ist, und einen ersten Innenlamellenträger, der mit der ersten Seitenwelle antriebsverbunden ist. Entsprechend weist die zweite Reibungskupplung einen zweiten Außenlamellenträger auf, der mit dem Elektromotor antriebsverbunden ist, und einen zweiten Innenlamellenträger, der mit der zweiten Seitenwelle antriebsverbunden ist. Vorzugsweise sind der erste Außenlamellenträger und der zweite Außenlamellenträger drehfest miteinander verbunden, insbesondere einteilig gestaltet.

Es ist vorgesehen, dass die erste Reibungskupplung und die zweite Reibungskupplung jeweils zwischen einer Offenstellung, in der kein Drehmoment übertragen wird, und einer Schließstellung, in der ein volles Drehmoment übertragen wird, stufenlos variabel steuerbar sind. So kann das benötigte Kupplungs- beziehungsweise Antriebsmoment am rechten und linken Rad nach Bedarf eingestellt werden.

Bevorzugte Ausführungsbeispiele werden nachstehend anhand der Zeichnungsfiguren erläutert. Hierin zeigt:
- Figur 1: schematisch eine Antriebsstranganordnung eines Kraftfahrzeugs für die Steuerung des Motormoments eines Elektromotors,
- Figur 2: schematisch ein Ablaufdiagramm für die Durchführung des erfindungsgemäßen Verfahrens zur Steuerung des Motormoments eines Elektromotors im Antriebsstrang eines Kraftfahrzeugs.

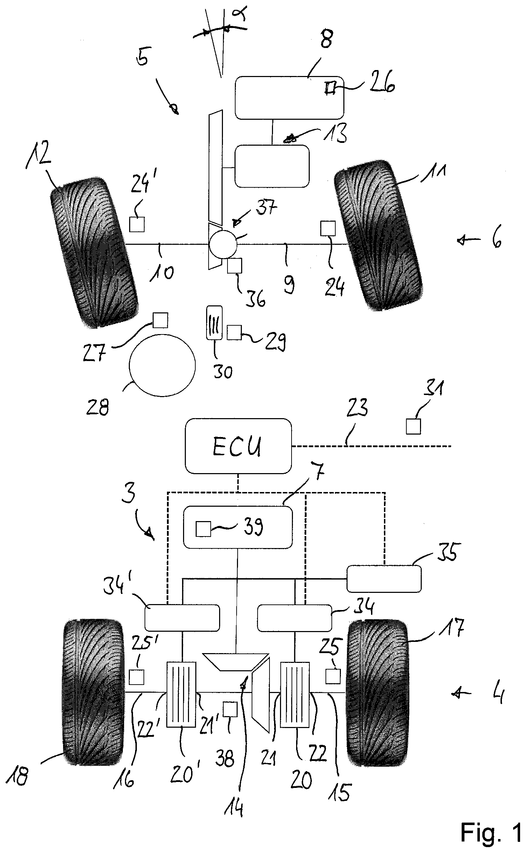

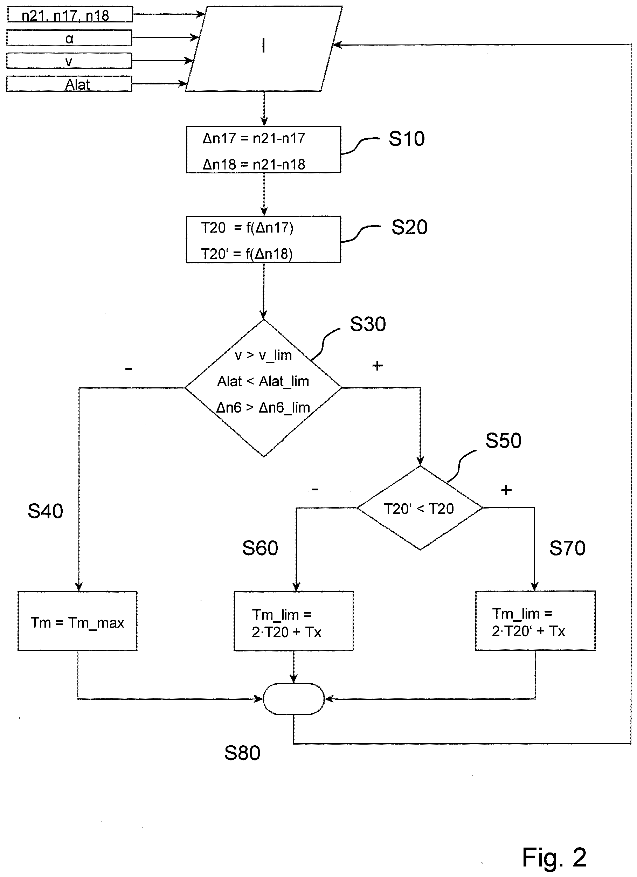

Die Figuren 1 und 2, welche nachstehend gemeinsam beschrieben werden, zeigen eine mechanische Antriebstranganordnung 2 eines Kraftfahrzeugs. Die Antriebsstranganordnung 2 umfasst einen ersten Antriebsstrang 3 mit einer ersten Antriebsachse 4 und einen zweiten Antriebsstrang 5 mit einer zweiten Antriebsachse 6.

Der erste Antriebsstrang 3 ist von einer ersten Antriebseinheit 7 antreibbar, die in Form einer elektrischen Maschine gestaltet ist. Der zweite Antriebsstrang 5 ist von einer zweiten Antriebseinheit 8 antreibbar, die insbesondere in Form einer Brennkraftmaschine gestaltet ist, wobei auch eine andere Antriebsquelle wie eine elektrische Maschine denkbar wäre. Der zweiten Antriebseinheit 8 kann ein Schaltgetriebe 13 nachgelagert sein, mit dem das Motormoment in ein Antriebsmoment beziehungsweise die Motordrehzahl in eine Antriebsdrehzahl umgewandelt wird.

Es ist erkennbar, dass die erste Antriebsachse 3 die Hinterachse und die zweite Antriebsachse 6 die Vorderachse des Kraftfahrzeugs bildet, wobei auch eine umgekehrte Anordnung möglich ist. Die beiden Antriebsstränge 3, 5 sind mechanisch voneinander getrennt, das heißt, es ist keine Kraftübertragung zwischen den beiden Antriebssträngen möglich. Die elektrische Maschine 7 dient allein zum Antrieb der ersten Antriebsachse 4, während die Antriebsquelle 8 allein zum Antrieb der zweiten Antriebsachse 6 dient. Es ist auch eine abgewandelte Ausführungsform möglich, bei der nur eine Fahrzeugachse angetrieben wird.

Die Vorderachse 6 umfasst ein Achsdifferential 37, welches das eingeleitete Antriebsmoment gleichmäßig auf die rechte und die linke vordere Seitenwelle 9, 10 des Kraftfahrzeugs verteilt. Die beiden Seitenwellen 9, 10 umfassen an ihren getriebeseitigen Enden und an ihren radseitigen Enden jeweils ein Gleichlaufdrehgelenk (nicht dargestellt), welche eine Drehmomentübertragung auf die Räder 11, 12 des Kraftfahrzeugs unter Winkelbewegung ermöglichen.

Der elektromotorisch angetriebene Antriebsstrang 3 umfasst eine rechte Seitenwelle 15 zum Antreiben des rechten Fahrzeugrads 17, eine linke Seitenwelle 16 zum Antreiben des linken Fahrzeugrads 18, eine steuerbare erste Reibungskupplung 20 im Leistungspfad zwischen dem Elektromotor 7 und der rechten Seitenwelle 15 sowie eine steuerbare zweite Reibungskupplung 20' im Leistungspfad zwischen dem Elektromotor 7 und der linken Seitenwelle 16. Bei der vorliegenden Ausführungsform wird eine vom Elektromotor 7 erzeugte Drehbewegung über einen optionalen Winkeltrieb 14 gleichmäßig auf die beiden Kupplungseingangsteile 21, 21' der beiden Reibungskupplungen 20, 20' eingeleitet. Die Ausgangsteile 22, 22' der beiden Kupplungen 20, 20' sind mit der jeweiligen Seitenwelle 15, 16 zur Drehmomentübertragung verbunden. An den äußeren Enden sind die beiden Seitenwellen 15, 16 mit den Rädern 17, 18 der Antriebsachse 4 verbunden.

Nach einer nicht dargestellten, abgewandelten Ausführungsform können die beiden Reibungskupplungen auch als Kupplungseinheit mit einem gemeinsamen Kupplungseingangsteil und zwei unabhängig voneinander drehbaren Kupplungsausgangsteilen gestaltet sein. In diesem Fall ist das gemeinsame Kupplungseingangsteil mit dem Elektromotor antriebsverbunden, während das rechte Kupplungsausgangsteil mit der rechten Seitenwelle, und das linke Kupplungsausgangsteil mit der linken Seitenwelle antriebsverbunden ist. Dabei kann das gemeinsame Kupplungseingangsteil insbesondere als Außenlamellenträger gestaltet sein; entsprechend sind die Kupplungsausgangsteile als Innenlamellenträger gestaltet.

Mit den zwei Reibungskupplungen 20, 20' wird die Drehmomentübertragung und -verteilung auf die beiden Seitenwellen 17, 18 gesteuert. Ein Achsdifferential ist nicht vorgesehen. Die beiden Kupplungseingangsteile 21, 21' sind starr miteinander verbunden, so dass sie mit derselben Drehzahl n4, n21 drehen. Zur Einstellung unterschiedlicher Antriebsmomente an den beiden Fahrzeugrädern 17, 18 sind die Kupplungen 20, 20' jeweils individuell ansteuerbar. Die beiden Kupplungen 20, 20' werden jeweils von einer zugehörigen Betätigungseinheit 34, 34' betätigt, mit der eine Axialkraft zum Schließen der jeweiligen Kupplung 20, 20' auf Reibelemente der Kupplung ausgeübt werden kann. Die Betätigungseinheiten 34, 34' können als hydraulische Betätigungseinheiten gestaltet sein, die von einer Pumpe 35 mit hydraulischem Druck versorgt werden. Es versteht sich, dass auch andere Formen von Betätigungseinheiten möglich sind, beispielsweise elektromotorische Aktuatoren, beispielsweise mit Kugelrampenanordnung, oder elektromagnetische Aktuatoren.

Die Betätigungseinheiten der Kupplungen 20, 20' und die elektrische Maschine 7 werden von einer elektronischen Steuereinheit (Electronic Control Unit, ECU) gesteuert, die entsprechende elektrische Steuerströme über Leitungen an die Kupplungen 20, 20' beziehungsweise die elektrische Maschine 7 abgibt. Zur elektrischen Signalübertragung von und zur Steuereinheit (ECU) ist eine serielle Bus-Anordnung 23 vorgesehen, die beispielsweise als CAN (Controller Area Network) Bus ausgebildet sein kann. Schnittstellen, Protokolle und elektrische Schaltungstechnik für die Signalübertragung auf einem CAN-Bus sind bekannt und müssen nicht näher erläutert werden. Es versteht sich, dass alternativ zu einer Bus-Anordnung auch eine individuelle Verdrahtung der verschiedenen elektrischen Komponenten des Fahrzeugs mit der Steuereinheit (ECU) vorgesehen sein kann.

Mit den beiden Kupplungen 20, 20' lassen sich verschiedene Fahrzustände realisieren. Das Antriebsmoment zum Antreiben der beiden Seitenwellen 15, 16 der zugehörigen Antriebsachse 4 kann individuell und variabel in Abhängigkeit vom ermittelten Bedarf (Solldrehmoment) eingestellt werden. Ferner können die beiden Seitenwellen 15, 16 und die elektrische Maschine 7 mittels der Kupplungen 20, 20' bedarfsweise miteinander verbunden oder voneinander getrennt werden. Die Kupplungen 20, 20' sind in Form von Reibungskupplungen gestaltet, welche eine stufenlos variable Einstellung des zwischen dem jeweiligen Kupplungseingangsteil 21, 21' und dem zugehörigen Kupplungsausgangsteil 22, 22' übertragbaren Kupplungsmoment ermöglicht. In vollständig geschlossenem Zustand sind die Seitenwellen 15, 16 drehfest miteinander verbunden, so dass sie mit derselben Drehzahl n4 rotieren. In offenem Zustand der beiden Kupplungen 20, 20' sind die beiden Seitenwellen 15, 16 von dem Elektromotor 7 mechanisch getrennt, so dass kein Drehmoment zwischen Elektromotor 7 und Rädern 17, 18 übertragen wird. Zwischen der Schließstellung und der Offenstellung können die Kupplungen 20, 20' auf jede Zwischenstellung stufenlos eingestellt werden, so dass sich hiermit das auf die rechte und linke Seitenwelle 15, 16 übertragene Drehmoment individuell einstellen und steuern lässt. Hierfür ermittelt die Steuereinheit (ECU) jeweils ein Sollmoment (T20, T20') individuell für die zugehörige Kupplung 20, 20'.

Die Steuereinheit (ECU) umfasst einen programmgesteuerten Mikroprozessor und einen elektronischen Speicher in dem ein Steuerprogramm abgelegt ist. Dabei werden vom Mikroprozessor nach Maßgabe des Steuerprogramms entsprechende Steuersignale für die Betätigungseinheiten 34, 34' der Kupplungen 20, 20' und die elektrische Maschine 7 erzeugt. Zur Erzeugung entsprechender Steuersignale ist die Steuereinheit (ECU) auf Informationen über verschiedene Betriebsparameter des Kraftfahrzeugs angewiesen. Hierfür kann die Steuereinheit (ECU) über die Bus-Anordnung 23 auf verschiedene Signale zugreifen, welche für diese Betriebsparameter repräsentativ sind.

Es sind insbesondere Drehzahlsensoren 24, 24'; 25, 25' vorgesehen, die Informationen über die jeweilige Drehzahl n11, n12, n18, n19 jedes der Räder 11, 12, 18, 19 bereitstellen. Aus den gemessenen Drehzahlen kann die Steuereinheit (ECU) eine Achsdrehzahl n4 der elektromotorisch angetriebenen Fahrzeugachse 4 beziehungsweise eine Achsdrehzahl n6 der zweiten Fahrzeugachse 6 berechnen. Es kann außerdem ein Drehzahlsensor 38 zur Überwachung eines die Drehzahl n21 der Kupplungseingangsteile 21 repräsentierenden Signals vorgesehen sein. Ferner kann ein Drehzahlsensor 36 zur Überwachung eines die Drehzahl n6 des Differentialkorbs des Differentials 37 der zweiten Fahrzeugachse 6 repräsentierenden Signals vorgesehen sein. Auf Basis der sensierten Drehzahlen n11, n12 der Vorderräder 11, 12 beziehungsweise der Drehzahl n6 des Differentialkorbs 37 kann erkannt werden, wenn eines der Vorderräder in einen Schlupfzustand gerät, so dass dann mittels der Steuereinheit (ECU) regelnd in die Fahrdynamik eingegriffen werden kann.

Es ist ferner vorgesehen, dass die Steuereinheit (ECU) auf zumindest ein Motorsignal zugreift, welches für das bereitgestellte Motormoment (T8) und/oder die Motordrehzahl (n8) der Antriebseinheit 8 repräsentativ ist. Das Motorsignal wird von einem schematisch dargestellten Motorsensor 26 auf die Bus-Anordnung 23 übertragen. Des Weiteren hat die Steuereinheit (ECU) Zugriff auf ein Lenkwinkelsignal. Das Lenkwinkelsignal wird von einem Drehwinkelsensor 27 geliefert, welcher die Drehstellung des Lenkrads 28 des Kraftfahrzeugs beziehungsweise einer das Lenkrad 28 tragenden Lenksäule erfasst. Dabei ist die Drehstellung des Lenkrads beziehungsweise der Lenksäule ein Maß für den mit α bezeichneten Lenkwinkel des Kraftfahrzeugs, das heißt die Winkelabweichung der Vorderräder von einer Geradeausstellung.

Als weiteres Eingangssignal für die Steuereinheit (ECU) kann ein Pedalstellungssignal dienen, welches mittels eines Pedalsensors 29 die Stellung des Gaspedals 30 des Kraftfahrzeugs angibt. Es kann ferner vorgesehen sein, dass die Steuereinheit (ECU) auf ein oder mehrere Beschleunigungssignale des Kraftfahrzeugs zugreifen kann, welche für die Querbeschleunigung Alat des Kraftfahrzeugs um die Hochachse beziehungsweise die Längsbeschleunigung des Kraftfahrzeugs repräsentativ ist. Hierfür ist symbolisch ein Beschleunigungssensor 31 eingezeichnet, der ebenfalls über die Bus-Anordnung 23 mit der Steuereinheit (ECU) verbunden ist.

Es kann auch vorgesehen sein, dass die Steuereinheit (ECU) auf weitere Signale zugreift, beispielsweise ein Gangstellungssignal, welches die Gangstellung des Schaltgetriebes erfasst. Außerdem kann die Steuereinheit (ECU) gemäß an sich bekannter Methoden eine Geschwindigkeit des Kraftfahrzeugs ermitteln.

Eine Besonderheit des vorliegenden Regelungskonzepts ist, dass die elektrische Maschine 7 in einem Drehmoment-Modus in Abhängigkeit von der Fahrzeuggeschwindigkeit gesteuert wird. Dabei ist konkret vorgesehen, dass, wenn die Fahrzeuggeschwindigkeit unterhalb eines vorgegebenen Geschwindigkeitsschwellenwerts v_lim liegt, der Elektromotor 7 in einem hohen Drehmoment-Modus gesteuert wird, wobei das bereitgestellte Motormoment Tm unlimitiert ist, beziehungsweise nach dem abgerufenen Bedarf eingestellt wird (Tm = Tm_max). Wenn die Fahrzeuggeschwindigkeit oberhalb des vorgegebenen Geschwindigkeitsschwellenwerts liegt wird der Elektromotor 7 demgegenüber in einem niedrigen Drehmoment-Modus gesteuert, derart, dass das vom Elektromotor 7 erzeugte Motormoment Tm auf einen gegenüber dem maximalen Motormoment kleineren Grenzwert Tm_lim begrenzt wird. Das begrenzte Motormoment Tm_lim ist kleiner gleich dem Doppelten des kleineren (T20low) von dem ersten und zweiten übertragbaren Kupplungsmoment (T20', T20) plus einem Zusatzmoment (Tx), das heißt Tm_lim ≤ 2 * T20low + Tx). Das Zusatzmoment Tx kann insbesondere kleiner gleich 50 % des maximal erzeugbaren Moments Tm_max des Elektromotors 7 sein. Die Ermittlung der von den Reibungskupplungen 20, 20' übertragbaren Kupplungsmomente T20', T20 erfolgt jeweils in Abhängigkeit zumindest von den Drehzahlwerten n17, n18 der beiden Fahrzeugräder 17, 18 der elektromotorisch angetriebenen Achse 4, jeweils im Verhältnis zur Drehzahl n21 der Kupplungseingangsteile 21, 21'.

Weitere Details werden nachstehend anhand des Ablaufdiagramms gemäß Figur 2 erläutert.

Es ist erkennbar, dass als Eingangsgrößen I zur Steuerung des Motormoments Tm des Elektromotors 7 die Drehzahl n21 der Kupplungseingangsteile 21, 21', die Drehzahlen n17, n18 der Räder 17, 18, die Fahrzeuggeschwindigkeit v, das Lenkwinkelsignal α und das Querbeschleunigungssignal Alat berücksichtigt werden. Dabei sind die letzten beiden Signalwerte, Lenkwinkelsignal α und Querbeschleunigungssignal Alat optional.

Im Schritt S10 wird ermittelt, ob gegebenenfalls Schlupf zwischen einem der beiden Räder 17, 18 der elektromotorisch angetriebenen Achse 4 und einem im Leistungspfad den Reibungskupplungen 20, 20' vorgelagerten Antriebsbauteil 21 anliegt. Hierfür kann die Differenz zwischen der Drehzahl n17 des rechten Rads 17 und der Drehzahl n21 des Kupplungseingangsteil 21, beziehungsweise die Differenz zwischen der Drehzahl n18 des linken Rads 18 und der Drehzahl n21 des Kupplungseingangsteils 21' herangezogen werden. Die Drehzahl n21 des jeweiligen Kupplungseingangsteils 21, 21' oder eines hiermit verbundenen Bauteils wird mittels des Drehzahlsensors 38 erfasst. Nach einer abgewandelten Ausführungsform können die beiden Reibungskupplungen 20, 20' auch als eine Baueinheit gestaltet sein. Dabei können die beiden Kupplungseingangsteile 21, 21' einteilig ausgeführt sein, insbesondere in Form eines Außenlamellenträgers. In diesem Fall wären die Innenlamellenträger drehfest mit der jeweiligen Seitenwelle verbunden. Es versteht sich, dass bei der Berechnung des Schlupfes eine gegebenenfalls aufgrund von Kurvenfahrt anliegende Drehzahldifferenz zwischen rechtem und linkem Rad 17, 18 berücksichtigt, beziehungsweise herausgerechnet wird.

In einem weiteren Schritt S20 werden das von der rechten Kupplung 20 übertragbare Kupplungsmoment T20 als Funktion der Drehzahldifferenz zwischen der Drehzahl n17 des rechten Fahrzeugrads 17 und der Drehzahl n21 des Kupplungseingangsteils 21 berechnet. Entsprechend wird das von der linken Kupplung 20' übertragbare Kupplungsmoment T20' als Funktion der Drehzahldifferenz zwischen der Drehzahl n18 des linken Fahrzeugrads 18 und der Drehzahl n21' des Kupplungseingangsteils 21' berechnet. Das erste und zweite Kupplungsteil 21, 21' sind starr miteinander verbunden und haben somit dieselbe Drehzahl (n21 = n21').

Es erfolgt laufend eine Überwachung der Fahrzeuggeschwindigkeit v und optional weiterer Werte, wie der Querbeschleunigung Alat und/oder einer möglichen Differenzdrehzahl zwischen den beiden Rädern 11, 12 der Vorderachse 6.

Je nachdem, ob der für die Fahrzeuggeschwindigkeit v repräsentierende Fahrzeug-Geschwindigkeitswert oberhalb oder unterhalb eines definierten Geschwindigkeitsschwellenwerts v_lim liegt, und gegebenenfalls, ob das ermittelte Querbeschleunigungssignal Alat oberhalb oder unterhalb eines definierten Querbeschleunigungsschwellwertes Alat_lim liegt, und gegebenenfalls, ob eine Drehzahldifferenz Δn6 zwischen dem rechten und linken Rad 11, 12 der Vorderachse 6 (sogenannter µ-splilt-Fahrzustand) oberhalb oder unterhalb eines definierten Drehzahldifferenzwertes Δn6_lim liegt, erfolgt dann im Schritt S30 eine Fallunterscheidung dahingehend, ob der Elektromotor 7 im hohen Drehmoment-Modus ("select high") oder im niedrigen Drehmoment-Modus ("select low") betrieben wird.

Falls die Fahrzeuggeschwindigkeit v unterhalb (-) des vorgegebenen Schwellenwerts v_lim liegt, der beispielsweise zwischen 50 und 70 km/h betragen kann, wird der Elektromotor 7 im hohen Drehmoment-Modus gesteuert, so dass das bereitgestellte Motormoment (Tm) unlimitiert ist (Tm = Tm_max). Dieser Modus, der auch als "Select-High" bezeichnet werden kann, ist im linken Zweig S40 der Figur 2 dargestellt. In diesem Betriebsmodus können beide Reibungskupplungen 20, 20' jeweils so geregelt werden, dass sie ein maximales Kupplungsmoment übertragen. Das maximal übertragbare Kupplungsmoment entspricht zumindest im Wesentlichen dem vom zugehörigen Fahrzeugrad 17, 18 auf die Straße übertragbaren Antriebsmoment.

Wenn die Fahrzeuggeschwindigkeit oberhalb (+) des vorgegebenen Schwellenwerts liegt, wird das Motormoment Tm des Elektromotors 7 auf einen Grenzwert T_lim limitiert (Tm = T_lim). Dieser Fall ist im rechten Zweig der Figur 2 dargestellt. Das begrenzte Motormoment (Tm_lim) orientiert sich am übertragbaren Kupplungsmoment (T20', T20) derjenigen Kupplung 20, 20', deren zugehöriges Fahrzeugrad 17, 18 die geringere Traktion zur Fahrbahn aufweist. Im Schritt S50 erfolgt eine Fallunterscheidung, ob aufgrund von Schlupf ein unterschiedliches übertragbares Kupplungsmoment T20', T20 zwischen den beiden Reibungskupplungen 20, 20' vorliegt, beziehungsweise, welches übertragbare Kupplungsmoment T20', T20 aufgrund von Schlupf gegebenenfalls größer und welches kleiner ist.

Insbesondere ist vorgesehen, dass das begrenzte Motormoment (Tm_lim) kleiner oder gleich ist, als das Doppelte des kleineren (T20low) von dem ersten und zweiten übertragbaren Kupplungsmoment (T20', T20) plus einem Zusatzmoment Tx, das heißt Tm_lim ≤ 2 * T20low + Tx. Das Zusatzdrehmoment Tx kann auf verschiedene Möglichkeiten bestimmt werden und beträgt insbesondere weniger als 50 % des maximal erzeugbaren Moments Tm_max des Elektromotors 7, das heißt Tm_lim ≤ 2 * T20low + 0,5 Tm_max.

Wenn am rechten Fahrzeugrad 17 Schlupf anliegt, das heißt, dass das übertragbare Kupplungsmoment T20 der rechten Reibungskupplung 20 kleiner ist, als das übertragbare Kupplungsmoment T20' der linken Reibungskupplung 20', wird der Grenzwert für das Motormoment Tm als Funktion vom übertragbare Kupplungsmoment T20 der rechten Reibungskupplung 20 ermittelt. Dabei gilt Tm_lim = 2* T20 + Tx. Diese Möglichkeit ist im linken Teilzweig S60 dargestellt. Wenn entsprechend am linken Fahrzeugrad 18 Schlupf anliegt, das heißt, dass das übertragbare Kupplungsmoment T20' der linken Reibungskupplung 20' kleiner ist, als das übertragbare Kupplungsmoment T20 der rechten Reibungskupplung 20, wird der Grenzwert für das Motormoment Tm als Funktion vom übertragbare Kupplungsmoment T20' der linken Reibungskupplung 20' ermittelt. Dabei gilt Tm_lim = 2* T20' + Tx. Diese Möglichkeit ist im rechten Teilzweig S70 dargestellt. Das Ende des Verfahrens ist mit S80 eingezeichnet.

Das Zusatzmoment Tx kann vorgesehen werden, um eine gewisse Traktion an dem Rad 17, 18 mit größerem Schlupf bereitzustellen, allerdings in einer Größenordnung, bei der ein gegebenenfalls auftretendes Giermoment unkritisch und im Hinblick auf die Fahrstabilität gut handhabbar ist. Für die konkrete Bestimmung des Zusatzmoments Tx sind mehrere Möglichkeiten denkbar. In einer einfachen Ausführung kann das Zusatzmoment auf einen konstanten Wert k festgelegt sein, der beispielsweise zwischen 5 Nm und 150 Nm betragen kann, das heißt Tx = k. Folglich wäre das bereitgestellte Motormoment Tm des Elektromotors 7 im Falle des Regeleingriffs auf das Zweifache des übertragbaren Antriebsmoments T20low des Fahrzeugrads 17, 18 mit dem niedrigen Reibwert zur Fahrbahn zuzüglich diesem konstanten Wert k limitiert, das heißt Tm < Tm_lim = 2 x T20low + k). Es ist auch möglich, dass das Zusatzmoment variabel eingestellt wird, vorzugsweise in Abhängigkeit von der Fahrzeuggeschwindigkeit. Dabei kann insbesondere vorgesehen sein, dass das Zusatzmoment bei höheren Fahrzeuggeschwindigkeiten auf einen kleineren Wert eingestellt wird als bei niedrigeren Fahrzeuggeschwindigkeiten. Insbesondere ist vorgesehen, dass das Zusatzmoment Tx kleiner gleich 50 % des maximalen Motormoments des Elektromotors 7 ist.

Das Verfahren kann sowohl im Zugbetrieb durchgeführt werden, das heißt, wenn der Elektromotor 7 elektrische Energie in mechanische Energie umwandelt, um das Fahrzeug anzutreiben, als auch im Schubbetrieb, das heißt, wenn der Elektromotor 7 mechanische Energie in elektrische Energie umwandelt, um das Fahrzeug zu bremsen.

Ein Vorteil des Verfahrens ist, dass eine hohe Fahrstabilität insbesondere auch bei hohen Geschwindigkeiten des Fahrzeugs gewährleistet ist, wobei Reibungsverluste im Antriebsstrang durch die Steuerung des Motormoments Tm des Elektromotors 7 im niedrigen Drehmoment-Modus minimiert werden. Der Leistungseintrag in die Reibungskupplung, die dem Fahrzeugrad 17, 18 mit größerem Schlupf beziehungsweise geringerem Reibwert zur Fahrbahn zugeordnet ist, wird entsprechend auf das auf die Fahrbahn übertragbare Antriebsmoment reduziert. Folglich ist auch der Energieeintrag in die jeweilige Reibungskupplung 20, 20' gering, so dass das Verfahren zu einer erhöhten Energieeffizienz bei Betreiben des Antriebsstranges beiträgt.

### Bezugszeichenliste

- 2: Antriebsstranganordnung
- 3: erster Antriebsstrang
- 4: erste Antriebsachse
- 5: zweiter Antriebsstrang
- 6: zweite Antriebsachse
- 7: elektrische Maschine / Elektromotor
- 8: Antriebsquelle
- 9: Seitenwelle
- 10: Seitenwelle
- 11: Rad
- 12: Rad
- 13: Getriebe
- 14: Winkeltrieb
- 15: Seitenwelle
- 16: Seitenwelle
- 17: Differentialkorb
- 18: Rad
- 19: Rad
- 20, 20': Kupplung
- 21: Kupplungseingangsteil
- 22: Kupplungsausgangsteil
- 23: Bus-Anordnung
- 24: Drehzahlsensor
- 25: Drehzahlsensor
- 26: Motorsensor
- 27: Drehwinkelsensor
- 28: Lenkrad
- 29: Pedalsensors
- 30: Gaspedal
- 31: Beschleunigungssensor
- 32: Ausgangsteil
- 33: Ausgangsteil
- 34: Betätigungseinheit
- 35: Pumpe
- 36: Drehzahlsensor
- 37: Achsdifferential
- 38: Drehzahlsensor
- 39: Motorsensor

- Alat: Querbeschleunigung
- α: Lenkungswinkel
- ECU: elektronische Steuereinheit
- I: Eingangssignal
- n: Drehzahl
- S10-S80: Schritt
- T: Drehmoment
- v: Geschwindigkeit

## Patentansprüche

1. Verfahren zur Steuerung eines Motormoments eines Elektromotors (7) in einem Antriebsstrang (3) eines Kraftfahrzeuges, wobei der Antriebsstrang (3) eine erste Seitenwelle (15) zum Antreiben eines ersten Fahrzeugrads (17), eine zweite Seitenwelle (16) zum Antreiben eines zweiten Fahrzeugrads (18), eine steuerbare erste Reibungskupplung (20), die der ersten Seitenwelle (15) zugeordnet ist, sowie eine steuerbare zweite Reibungskupplung (20'), die der zweiten Seitenwelle (16) zugeordnet ist, sowie ein im Leistungspfad zwischen dem Elektromotor (7) und zumindest einer von der ersten und der zweiten Reibungskupplung (20, 20') angeordnetes Antriebsteil (21);
mit folgenden Verfahrensschritten:
Überwachen eines die Drehzahl (n21) des Antriebsteils (21) repräsentierenden Antriebsdrehzahlwerts;
Überwachen eines die Drehzahl (n17) des ersten Fahrzeugrads (17) repräsentierenden ersten Drehzahlwerts;
Überwachen eines die Drehzahl (n18) des zweiten Fahrzeugrads (18) repräsentierenden zweiten Drehzahlwerts;
Ermitteln eines übertragbaren ersten Kupplungsmoments (T20) für die erste Reibungskupplung (20) in Abhängigkeit von dem ersten Drehzahlwert relativ zum Antriebsdrehzahlwert; und
Ermitteln eines übertragbaren zweiten Kupplungsmoments (T20') für die zweite Reibungskupplung (20') in Abhängigkeit von dem zweiten Drehzahlwert relativ zum Antriebsdrehzahlwert;
Überwachen eines die Fahrzeuggeschwindigkeit (v) repräsentierenden Fahrzeug-Geschwindigkeitswerts und Vergleichen des Fahrzeug-Geschwindigkeitswerts mit einem vorgegebenen Geschwindigkeitsschwellenwert (v_lim);
wenn der Fahrzeug-Geschwindigkeitswert unterhalb des vorgegebenen Geschwindigkeitsschwellenwert (v_lim) liegt:
Steuern des Elektromotors (7) in einem hohen Drehmoment-Modus derart, dass ein vom Elektromotor (7) erzeugtes Motormoment nach Bedarf zur Verfügung gestellt wird;
**dadurch gekennzeichnet, dass**
wenn der Fahrzeug-Geschwindigkeitswert oberhalb des vorgegebenen Geschwindigkeitsschwellenwert (v_lim) liegt:
Steuern des Elektromotors (7) in einem niedrigen Drehmoment-Modus derart, dass das vom Elektromotor (7) erzeugte Motormoment (Tm) kleiner ist als das Doppelte des kleineren von dem ersten und zweiten übertragbaren Kupplungsmoment (T20, T20') plus 50 % des maximal erzeugbaren Moments (Tm_max) des Elektromotors (7).

2. Verfahren nach Anspruch 1,
**dadurch gekennzeichnet, dass** als weiterer Schritt vorgesehen ist:
Überwachen einer für die Querbeschleunigung (Alat) des Kraftfahrzeugs repräsentativen Querbeschleunigungsgröße und Erzeugen eines Querbeschleunigungssignals,
wobei der Elektromotor (7) in Abhängigkeit von dem Querbeschleunigungssignal gesteuert wird, derart,
dass der Elektromotor (7) in dem hohen Drehmoment-Modus gesteuert wird, wenn das Querbeschleunigungssignal oberhalb eines definierten Querbeschleunigungsschwellwertes liegt, und
dass der Elektromotor (7) in dem niedrigen Drehmoment-Modus gesteuert wird, wenn das Querbeschleunigungssignal unterhalb des definierten Querbeschleunigungsschwellwertes liegt.

3. Verfahren nach Anspruch 2,
**dadurch gekennzeichnet, dass** das Querbeschleunigungssignal zur Ermittlung von zumindest einem von
dem Motormoment (Tm) des Elektromotors (7),
der Solldrehzahl (n7) des Elektromotors (7),
dem übertragbaren ersten Kupplungsmoment (T20) der ersten Kupplung (20) und
dem übertragbaren zweiten Kupplungsmoment (T20') der zweiten Kupplung (20')
verwendet wird.

4. Verfahren nach einem der Ansprüche 1 bis 3,
**dadurch gekennzeichnet, dass** das Kraftfahrzeug eine angetriebene Vorderachse (6) und eine Hinterachse (4) aufweist, wobei der vom Elektromotor (7) antreibbare Antriebsstrang (3) der Hinterachse (4) zugeordnet ist, wobei als weiterer Schritt vorgesehen ist:
Ermitteln einer Differenzdrehzahl zwischen einer ersten Seitenwelle (9) und einer zweiten Seitenwelle (10) der Vorderachse (6); und
Steuern des Elektromotors (7) in Abhängigkeit von der Differenzdrehzahl derart,
dass der Elektromotor (7) in dem hohen Drehmoment-Modus gesteuert wird, wenn die Differenzdrehzahl unterhalb eines definierten Differenzdrehzahlschwellwertes liegt, und
dass der Elektromotor (7) in dem niedrigen Drehmoment-Modus gesteuert wird, wenn die Differenzdrehzahl oberhalb des definierten Differenzdrehzahlschwellwertes liegt.

5. Verfahren nach einem der Ansprüche 1 bis 4,
**dadurch gekennzeichnet, dass** als weiterer Schritt vorgesehen ist:
Überwachen von für die Räderdrehzahlen (n11, n12, n18, n19) des Kraftfahrzeugs repräsentativen Raddrehzahlgrößen und Erzeugen von Raddrehzahlsignalen, wobei die Raddrehzahlsignale zur Ermittlung von zumindest einem von dem Motormoment (Tm) des Elektromotors (7),
der Solldrehzahl (n7) des Elektromotors (7),
dem übertragbaren ersten Kupplungsmoment (T20) der ersten Kupplung (20) und
dem übertragbaren zweiten Kupplungsmoment (T20') der zweiten Kupplung (20')
verwendet wird.

6. Verfahren nach einem der Ansprüche 1 bis 5,
**dadurch gekennzeichnet, dass** als weiterer Schritt vorgesehen ist:
Überwachen einer für den Lenkungswinkel (a) des Kraftfahrzeugs repräsentativen Lenkungsgröße und Erzeugen eines Lenkungssignals, wobei das Lenkungssignal zur Ermittlung von zumindest einem von dem Motormoment (Tm) des Elektromotors (7),
der Solldrehzahl (n7) des Elektromotors (7),
dem übertragbaren ersten Kupplungsmoment (T20) der ersten Kupplung (20) und
dem übertragbaren zweiten Kupplungsmoment (T20') der zweiten Kupplung (20')
verwendet wird.

7. Verfahren nach einem der Ansprüche 1 bis 6,
**dadurch gekennzeichnet,**
**dass** zum Ermitteln des übertragbaren ersten Kupplungsmoments (T20) die Drehzahl (n21) des ersten Kupplungseingangsteils (21) mit der Drehzahl (n22) des ersten Kupplungsausgangsteils (22) verglichen wird und,
**dass** zum Ermitteln des übertragbaren zweiten Kupplungsmoments (T20') die Drehzahl (n21') des zweiten Kupplungseingangsteils (21') mit der Drehzahl (n22') des zweiten Kupplungsausgangsteils (22') verglichen wird.

8. Verfahren nach einem der Ansprüche 1 bis 7,
**dadurch gekennzeichnet, dass** das Motormoment des Elektromotors (7) positiv ist, wobei der Elektromotor (7) im hohen Drehmoment-Modus auf ein maximal erzeugbares Antriebsmoment eingestellt wird, oder
dass das Motormoment des Elektromotors (7) negativ ist, wobei der Elektromotor (7) im hohen Drehmoment-Modus auf ein maximal erzeugbares Bremsmoment eingestellt wird.

9. Antriebsstranganordnung für ein Kraftfahrzeug, umfassend:
einen Antriebsstrang (3) mit einem Elektromotor (7), einer ersten Seitenwelle (15) zum Antreiben eines ersten Fahrzeugrads (17), einer zweiten Seitenwelle (16) zum Antreiben eines zweiten Fahrzeugrads (18), einer steuerbaren ersten Reibungskupplung (20), die ein von der ersten Seitenwelle (15) übertragbares Drehmoment regelt, einer steuerbaren zweiten Reibungskupplung (20'), die ein von der zweiten Seitenwelle (16) übertragbares Drehmoment regelt, sowie einem im Leistungspfad zwischen dem Elektromotor (7) und zumindest einer von der ersten und zweiten Reibungskupplung (20, 20') angeordneten Antriebsteil (21);
erste Sensormittel (25) zur Ermittlung eines die Drehzahl (n17) des ersten Fahrzeugrads (17) repräsentierenden ersten Drehzahlwerts;
zweite Sensormittel (25') zur Ermittlung eines die Drehzahl (n18) des zweiten Fahrzeugrads (18) repräsentierenden zweiten Drehzahlwerts;
einen Antriebsdrehzahlsensor (38, 39) zur Ermittlung eines die Drehzahl des Antriebsteils (21) repräsentierenden Antriebsdrehzahlwerts; und
zumindest eine Steuereinheit (ECU) zum Steuern der elektrischen Maschine (7);
**dadurch gekennzeichnet, dass** die Steuereinheit (ECU) dazu eingerichtet ist, das Verfahren nach einem der Ansprüche 1 bis 8 durchzuführen.

10. Antriebsstranganordnung nach Anspruch 9,
**dadurch gekennzeichnet, dass** die erste Reibungskupplung (20) einen ersten Außenlamellenträger aufweist, der mit dem Elektromotor (7) antriebsverbunden ist, und einen ersten Innenlamellenträger, der mit der ersten Seitenwelle (15) antriebsverbunden ist, und,
dass die zweite Reibungskupplung (20') einen zweiten Außenlamellenträger aufweist, der mit dem Elektromotor (7) antriebsverbunden ist, und einen zweiten Innenlamellenträger, der mit der zweiten Seitenwelle (16) antriebsverbunden ist,
wobei der erste Außenlamellenträger und der zweite Außenlamellenträger drehfest miteinander verbunden sind, insbesondere einteilig gestaltet sind.

11. Antriebsstranganordnung nach Anspruch 9 oder 10,
**dadurch gekennzeichnet, dass** der Antriebsstrang (3) mit Elektromotor (7) der Hinterachse (4) des Kraftfahrzeugs zugeordnet ist, wobei ferner ein Antriebsstrang (5) zum Antreiben der Vorderachse (6) des Kraftfahrzeugs vorgesehen ist, der vom Antriebsstrang (3) der Hinterachse (4) mechanisch getrennt ist.

12. Antriebsstranganordnung nach einem der Ansprüche 9 bis 11, **dadurch gekennzeichnet,**
**dass** die erste Reibungskupplung (20) und die zweite Reibungskupplung (20') jeweils zwischen einer Offenstellung, in der kein Drehmoment übertragen wird, und einer Schließstellung, in der ein volles Drehmoment übertragen wird, stufenlos variabel steuerbar sind.

## Claims

1. Method for controlling a motor torque of an electric motor (7) in a driveline (3) of a motor vehicle, the driveline (3) comprising a first side shaft (15) for driving a first vehicle wheel (17), a second side shaft (16) for driving a second vehicle wheel (18), a controllable first friction clutch (20) which is associated with the first side shaft (15), and a controllable second friction clutch (20') which is associated with the second side shaft (16), and a drive member (21) arranged in the power path between the electric motor (7) and at least one of the first and second friction clutch (20, 20');
with the following method steps:
monitoring a drive speed value representing the rotation speed (n21) of the drive member (21);
monitoring a first speed value representing the rotation speed (n17) of the first vehicle wheel (17);
monitoring a second speed value representing the rotation speed (n18) of the second vehicle wheel (18);
determining a transmittable first clutch torque (T20) for the first friction clutch (20) as a function of the first speed value relative to the drive speed value; and
determining a transmittable second clutch torque (T20') for the second friction clutch (20') as a function of the second speed value relative to the drive speed value;
monitoring a vehicle speed value representing the vehicle speed (v) and comparing the vehicle speed value with a predetermined speed threshold value (v_lim);
if the vehicle speed value is below the predetermined speed threshold value (v_lim):
controlling the electric motor (7) in a high torque mode such that a motor torque generated by the electric motor (7) is provided as required;
**characterised in that**
if the vehicle speed value is above the predetermined speed threshold value (v_lim):
controlling the electric motor (7) in a low torque mode such that the motor torque (Tm) generated by the electric motor (7) is less than twice the smaller one of the first and second transmittable clutch torque (T20, T20') plus 50% of the maximum generatable torque (Tm_max) of the electric motor (7).

2. Method according to claim 1,
**characterised in that** a further step is provided:
monitoring a lateral acceleration value representing a lateral acceleration (Alat) of the motor vehicle and generating a lateral acceleration signal,
wherein the electric motor (7) is controlled as a function of the lateral acceleration signal, in such a way,
that the electric motor (7) is controlled in the high torque mode when the lateral acceleration signal is above a defined lateral acceleration threshold value, and
that the electric motor (7) is controlled in the low torque mode when the lateral acceleration signal is below the defined lateral acceleration threshold.

3. Method according to claim 2,
**characterised in that** the lateral acceleration signal is used to determine at least one of:
the motor torque (Tm) of the electric motor (7),
the target speed (n7) of the electric motor (7),
the transmittable first clutch torque (T20) of the first clutch (20), and
the transmittable second clutch torque (T20') of the second clutch (20').

4. Method according to any one of claims 1 to 3,
**characterised in that** the motor vehicle has a driven front axle (6) and a rear axle (4), wherein the driveline (3) which is drivable by the electric motor (7) is assigned to the rear axle (4),
wherein a further step is provided:
detecting a differential speed between a first side shaft (9) and a second side shaft (10) of the front axle (6); and
controlling the electric motor (7) depending on the differential speed in such a way,
that the electric motor (7) is controlled in the high torque mode when the differential speed is below a defined differential speed threshold, and
that the electric motor (7) is controlled in the low torque mode when the differential speed is above the defined differential speed threshold.

5. Method according to any one of claims 1 to 4,
**characterised in that** a further step is provided:
monitoring wheel speed values representing the wheel speeds (n11, n12, n18, n19) of the motor vehicle and generating wheel speed signals, wherein the wheel speed signals are used to determine at least one of:
the motor torque (Tm) of the electric motor (7),
the target speed (n7) of the electric motor (7),
the transmittable first clutch torque (T20) of the first clutch (20), and
the transmittable second clutch torque (T20') of the second clutch (20').

6. Method according to any one of claims 1 to 5,
**characterised in that** a further step is provided:
monitoring a steering value representing the steering angle (α) of the motor vehicle and generating a steering signal, wherein the steering signal is used to determine at least one of:
the motor torque (Tm) of the electric motor (7),
the target speed (n7) of the electric motor (7),
the transmittable first clutch torque (T20) of the first clutch (20), and
the transmittable second clutch torque (T20') of the second clutch (20').

7. Method according to any one of claims 1 to 6,
**characterised in**
**that**, in order to determine the transmittable first clutch torque (T20), the speed (n21) of the first clutch input part (21) is compared with the speed (n22) of the first clutch output part (22) and,
**that**, in order to determine the transmittable second clutch torque (T20'), the speed (n21') of the second clutch input part (21') is compared with the speed (n22') of the second clutch output part (22') in order to determine the transmissible second clutch torque (T20').

8. Method according to any one of claims 1 to 7,
**characterised in**
**that** the motor torque of the electric motor (7) is positive, wherein the electric motor (7) in the high torque mode is set to a maximum generatable driving torque, or
**that** the motor torque of the electric motor (7) is negative, wherein the electric motor (7) in the high torque mode is set to a maximum generatable braking torque.

9. Driveline assembly for a motor vehicle, comprising:
a driveline (3) with an electric motor (7), a first side shaft (15) for driving a first vehicle wheel (17), a second side shaft (16) for driving a second vehicle wheel (18), a controllable first friction clutch (20) which controls a torque transmittable by the first side shaft (15), a controllable second friction clutch (20') which controls a torque transmittable by the second side shaft (16), and a drive member (21) arranged in the power path between the electric motor (7) and at least one of the first and second friction clutch (20, 20');
first sensor means (25) for determining a first speed value representing the speed (n17) of the first vehicle wheel (17);
second sensor means (25') for determining a second speed value representing the speed (n18) of the second vehicle wheel (18);
a drive speed sensor (38, 39) for determining a drive speed value representing the speed of the drive member (21); and
at least one control unit (ECU) for controlling the electric machine (7);
**characterised in that** the control unit (ECU) is configured to perform the method according to any one of claims 1 to 8.

10. Driveline assembly according to claim 9,
**characterised in**
**that** the first friction clutch (20) comprises a first outer plate carrier drivingly connected to the electric motor (7) and a first inner plate carrier drivingly connected to the first side shaft (15), and,
**that** the second friction clutch (20') comprises a second outer plate carrier drivingly connected to the electric motor (7), and a second inner plate carrier drivingly connected to the second side shaft (16),
wherein the first outer plate carrier and the second outer plate carrier are connected to one another in a rotationally fixed manner, in particular designed in one piece.

11. Driveline assembly according to claim 9 or 10,
**characterised in that** the driveline (3) with the electric motor (7) is associated with the rear axle (4) of the motor vehicle, wherein a driveline (5) for driving the front axle (6) of the motor vehicle is further provided, which is mechanically separated from the driveline (3) of the rear axle (4).

12. Driveline assembly according to any one of claims 9 to 11,
**characterised in**
**that** the first friction clutch (20) and the second friction clutch (20') are each continuously variable between an open position in which no torque is transmitted and a closed position in which a full torque is transmitted.

## Revendications

1. Procédé, destiné à commander un couple d'entraînement d'un moteur électrique (7) dans une chaîne cinématique (3) d'un véhicule automobile, à la chaîne cinématique (3) étant associé un premier arbre latéral (15) destiné à entraîner une première roue de véhicule (17), un deuxième arbre latéral (16) destiné à entraîner une deuxième roue de véhicule (18), un premier embrayage à friction (20) contrôlable, qui est associé au premier arbre latéral (15), ainsi qu'un deuxième embrayage à friction (20') contrôlable, qui est associé au deuxième arbre latéral (16), ainsi qu'une pièce d'entraînement (21) placée dans le trajet de puissance entre le moteur électrique (7) et au moins l'un parmi le premier et le deuxième embrayage à friction (20, 20') ;
comportant les étapes de procédé suivantes consistant à :
superviser une valeur de régime d'entraînement représentant le régime (n21) de la partie d'entraînement (21) ;
superviser une première valeur de régime représentant le régime (n17) de la première roue de véhicule (17) ;
superviser une deuxième valeur de régime représentant le régime (n18) de la deuxième roue de véhicule (18) ;
déterminer un premier couple d'embrayage (T20) transmissible pour le premier embrayage à friction (20) en fonction de la première valeur de régime par rapport à la valeur de régime d'entraînement ; et
déterminer un deuxième couple d'embrayage (T20') transmissible pour le deuxième embrayage à friction (20') en fonction de la deuxième valeur de régime par rapport à la valeur de régime d'entraînement;
superviser une valeur de vitesse du véhicule représentant la vitesse du véhicule (v) et comparer la valeur de vitesse du véhicule avec une valeur de vitesse seuil (v_lim) prédéfinie ;
si la valeur de vitesse du véhicule est inférieure à la valeur de vitesse seuil (v_lim) prédéfinie :
commander le moteur électrique (7) dans un mode de couple élevé, de telle sorte qu'un couple moteur généré par le moteur électrique (7) soit mis à disposition en fonction des besoins ;
**caractérisé en ce que**
si la valeur de vitesse du véhicule est supérieure à la valeur de vitesse seuil (v_lim) prédéfinie :
commander le moteur électrique (7) dans un mode de couple bas, de telle sorte que le couple généré par le moteur électrique (7) soit inférieur au double de plus petit parmi le premier et le deuxième couples d'embrayage (T20, T20') transmissibles plus 50 % du couple maximal (Tm_max) susceptible d'être généré du moteur électrique (7).

2. Procédé selon la revendication 1,
**caractérisé en ce qu'**il est prévu en tant qu'étape suivante, celle consistant à :
superviser une grandeur d'accélération transversale représentative de l'accélération transversale (Alat) du véhicule automobile et générer un signal d'accélération transversale,
le moteur électrique (7) étant commandé en fonction de du signal d'accélération transversale, de telle sorte que
le moteur électrique (7) soit commandé en mode de couple élevé si le signal d'accélération transversale est supérieur à une valeur d'accélération transversale définie, et
**en ce que** le moteur électrique (7) est commandé en mode de couple bas, si le signal d'accélération transversale est inférieur à la valeur d'accélération transversale définie.

3. Procédé selon la revendication 2,
**caractérisé en ce que** le signal d'accélération transversale est utilisé pour déterminer au moins un l'un parmi
le couple moteur (Tm) du moteur électrique (7),
le régime de consigne (n7) du moteur électrique (7), le premier couple d'embrayage (T20) transmissible du premier embrayage (20) et
le deuxième couple d'embrayage (T20') transmissible du deuxième embrayage (20').

4. Procédé selon l'une quelconque des revendications 1 à 3,
**caractérisé en ce que** le véhicule automobile comporte un essieu avant (6) entraîné et un essieu arrière (4), la chaîne cinématique (3) entraînable par le moteur électrique (7) étant associé à l'essieu arrière (4), étant prévue en tant qu'étape supplémentaire celle consistant à :
déterminer un régime différentiel entre un premier arbre latéral (9) et un deuxième arbre latéral (10) de l'essieu avant (6) ; et
commander le moteur électrique (7) en fonction du régime différentiel, de telle sorte que
le moteur électrique (7) soit commandé en mode de couple élevé,
si le régime différentiel est inférieur à une valeur seuil de régime différentiel définie, et
**en ce que** le moteur électrique (7) est commandé en mode de couple bas si le régime différentiel est supérieur à la une valeur seuil de régime différentiel définie.

5. Procédé selon l'une quelconque des revendications 1 à 4,
**caractérisé en ce que** qu'il est prévu en tant qu'étape supplémentaire celle consistant à :
superviser des grandeurs de régime des roues représentatives des vitesses de rotation des roues (n11, n12, n18, n19) du véhicule automobile et générer des signaux de régime des roues, les signaux de régime des roues étant utilisés pour déterminer au moins l'un parmi
le couple moteur (Tm) du moteur électrique (7),
le régime de consigne (n7) du moteur électrique (7),
le premier couple d'embrayage (T20) transmissible du premier embrayage (20) et
le deuxième couple d'embrayage (T20') transmissible du deuxième embrayage (20').

6. Procédé selon l'une quelconque des revendications 1 à 5,
**caractérisé en ce qu'**il est prévu en tant qu'étape supplémentaire celle consistant à :
superviser une grandeur de direction représentative de l'angle de direction (α) du véhicule automobile et générer un signal de direction, le signal de direction étant utilisé pour déterminer au moins l'un parmi le couple moteur (Tm) du moteur électrique (7),
le régime de consigne (n7) du moteur électrique (7),
le premier couple d'embrayage (T20) transmissible du premier embrayage (20) et
le deuxième couple d'embrayage (T20') transmissible du deuxième embrayage (20').

7. Procédé selon l'une quelconque des revendications 1 à 6,
**caractérisé en ce que** pour déterminer le premier couple d'embrayage (T20) transmittable, le régime (n21) de la première pièce d'entrée d'embrayage (21) est comparé avec le régime (n22) de la première pièce de sortie d'embrayage (22) et,
**en ce que** pour déterminer le deuxième couple d'embrayage (T20') transmissible, le régime (n21') de la deuxième pièce d'entrée d'embrayage (21') est comparé avec le régime (n22') de la deuxième pièce de sortie d'embrayage (22').

8. Procédé selon l'une quelconque des revendications 1 à 7,
**caractérisé en ce que** le couple moteur du moteur électrique (7) est positif, le moteur électrique (7) étant réglé en mode de couple élevé à un couple d'entraînement maximum susceptible d'être généré, ou en ce que le couple moteur du moteur électrique (7) est négatif, le moteur électrique (7) étant réglé en mode de couple élevé à un couple de freinage maximum susceptible d'être généré.

9. Ensemble d'entraînement d'un véhicule automobile, comprenant :
une chaîne cinématique (3) pourvue d'un moteur électrique (7), d'un premier arbre latéral (15) destiné à entraîner une première roue de véhicule (17), d'un deuxième arbre latéral (16) destiné à entraîner une deuxième roue de véhicule (18), d'un premier embrayage à friction (20) contrôlable, qui régule un couple transmissible par le premier arbre latéral (15), d'un deuxième embrayage à friction (20') contrôlable, qui régule un couple transmissible par le deuxième arbre latéral (16), ainsi que d'une pièce d'entraînement (21) placée dans le trajet de puissance entre le moteur électrique (7) et au moins l'un parmi le premier et le deuxième embrayages à friction (20, 20') ;
des premiers moyens capteurs (25) destinés à déterminer une première valeur de régime représentant le régime (n17) de la première roue de véhicule (17) ;
des deuxièmes moyens capteurs (25') destinés à déterminer une deuxième valeur de régime représentant le régime (n18) de la deuxième roue de véhicule (18) ;
un capteur de régime d'entraînement (38, 39), destiné à déterminer une valeur de régime d'entraînement représentant le régime de la partie d'entraînement (21) ; et
au moins une unité de commande (ECU), destinée à commander la machine électrique (7);
**caractérisé en ce que** l'unité de commande (ECU) est aménagée pour réaliser le procédé selon l'une quelconque des revendications 1 à 8.

10. Ensemble d'entrainement selon la revendication 9,
**caractérisé en ce que** le premier embrayage à friction (20) comporte un premier support de lamelles extérieur, qui est relié en entraînement avec le moteur électrique (7), et un premier support de lamelles intérieur, qui est relié en entraînement avec le premier arbre latéral (15), et,
**en ce que** le deuxième embrayage à friction (20') comporte un deuxième support de lamelles extérieur, qui est relié en entraînement avec le moteur électrique (7), et un deuxième support de lamelles intérieur, qui est relié en entraînement avec le deuxième arbre latéral (16),
le premier support de lamelles extérieur et le deuxième support de lamelles extérieur étant reliés l'un à l'autre de manière solidaire en rotation, étant conçus notamment en monobloc.

11. Ensemble d'entraînement selon la revendication 9 ou 10, **caractérisé en ce que** la chaîne cinématique (3) avec moteur électrique (7) est associée à l'essieu arrière (4) du véhicule automobile, par ailleurs pour entraîner l'essieu avant (6) du véhicule automobile, étant prévue une chaîne cinématique (5) qui est mécaniquement séparée de la chaîne cinématique (3) de l'essieu arrière (4) .

12. Ensemble d'entraînement selon l'une quelconque des revendications 9 à 11, **caractérisé en ce que** le premier embrayage à friction (20) et le deuxième embrayage à friction (20') sont susceptibles d'être contrôlés de manière variable en continu entre une position d'ouverture dans laquelle aucun couple n'est transmis, et une position de fermeture dans laquelle un couple plein est transmis.
